# FASCICULE DE BREVET EUROPEEN

(11) **EP 2 809 537 B1**
(45) Date de publication et mention de la délivrance du brevet: **20.04.2016**
(21) Numéro de dépôt: 13706614.8
(22) Date de dépôt: 01.02.2013
(51) Int. Cl.: B60K 1/00, B60K 1/04, F28F 3/12, F28F 13/00, H01M 2/10, H01M 10/613, H01M 10/617, H01M 10/625, H01M 10/6551, H01M 10/6554

(54) **BOÎTIER POUR MODULE ÉLECTRIQUE D'UN PACK BATTERIE POUR VÉHICULE AUTOMOBILE ET PACK BATTERIE ASSOCIÉ**
GEHÄUSE FÜR EIN ELEKTRISCHES MODUL EINES BATTERIEPACKS FÜR EIN KRAFTFAHRZEUG UND ZUGEHÖRIGES BATTERIEPACK
HOUSING FOR AN ELECTRIC MODULE OF A BATTERY PACK FOR A MOTOR VEHICLE AND CORRESPONDING BATTERY PACK

(30) Priorité: 01.02.2012 FR 1250960
(43) Date de publication de la demande: 10.12.2014
(73) Titulaire: Compagnie Plastic Omnium, 69007 Lyon (FR); Valeo Systemes Thermiques, 78320 Le Mesnil-Saint-Denis Cedex (FR)
(72) Inventeur: ANDRE, Gérald, 01500 Amberieu En Bugey (FR); GILOTTE, Philippe, 01470 Benonces (FR); ELLIOT, Gilles, 91080 Courcouronnes (FR); FEUILLARD, Vincent, 78320 Le Mesnil Saint Denis (FR); LADRECH, Frédéric, 78310 Maurepas (FR)
(74) Mandataire: Remy, Vincent Noel Paul
(86) Numéro de dépôt international: PCT/FR2013/050216
(87) Numéro de publication internationale: WO 2013/114054

(56) Documents cités:
- EP-A1- 2 337 141
- EP-A2- 2 362 463
- DE-A1-102009 040 814
- DE-A1-102009 058 070

## Description

La présente invention concerne un boîtier pour module électrique d'un pack batterie pour véhicule automobile et un tel pack batterie.

Selon l'invention, on entend par « cellule » un dispositif électrique unitaire capable de produire du courant électrique. Typiquement, une cellule peut produire un courant de tension comprise entre 2 et 4 Volts, en général 3,7 Volts, et est normalement destinée à être associée à d'autres cellules, selon un montage en série, pour fournir un courant de tension supérieure.

Une cellule peut avoir une enveloppe rigide ou souple. Dans ce dernier cas, on parle de « pouch cell » ou « cellule poche ».

On entend par « module » un ensemble de plusieurs cellules ayant une structure rigide autoporteuse, cette structure rigide autoporteuse pouvant être constituée soit par une enveloppe rigide unique renfermant plusieurs cellules à enveloppe souple ou rigide, soit par l'assemblage de plusieurs cellules à enveloppes rigides, juxtaposées les unes à côté des autres.

Enfin, on entend par « pack batterie » un ensemble électrique contenant au moins un module et des moyens de régulation thermique de ce module, sous la forme d'au moins une plaque thermorégulatrice.

La plaque thermorégulatrice est en général refroidie et, donc, refroidissante pour le module. Toutefois, il n'est pas exclu qu'elle puisse servir, au moins provisoirement, à chauffer un module pour l'amener à une température de fonctionnement optimale, alors que les conditions climatiques sont défavorables. La plaque thermorégulatrice peut comporter des canaux internes de circulation d'un fluide caloporteur.

Dans US 2010/0025132A2, on décrit des modules de cellules électriques, munis de moyens de refroidissement qui peuvent être des plaques refroidissantes maintenues en dessous de 43°C, des dissipateurs thermiques ou encore des systèmes de circulation d'air froid provenant du circuit général de refroidissement du véhicule.

Dans un tel ensemble, il est important que les contacts entre les modules et les plaques refroidissantes soient de très bonne qualité. Or, ce résultat n'est pas évident à atteindre car il suppose une très grande précision de dimensionnement, à la fois des cellules et des moyens de refroidissement, ce qui n'est généralement pas le cas. De plus, des variations dimensionnelles de ces constituants peuvent apparaître ou s'accroître au cours de la vie du pack batterie. Un simple empilement, comme proposé dans l'état de la technique, ne fournit donc pas les conditions d'une conduction thermique optimale entre les modules et les moyens de refroidissement.

Il est par ailleurs connu, face à un problème de conduction thermique entre deux surfaces, d'intercaler entre ces surfaces une interface thermoconductrice, telle qu'un film thermoconducteur, quelquefois appelé « pad thermique ». Un exemple d'un tel pad thermique est un film en silicone ayant une charge céramique, qui améliore la conduction thermique entre chaque cellule et la plaque froide, par compensation des petits défauts de planéité ou d'alignement de la paroi inférieure de chaque cellule du module et des défauts de planéité de la plaque refroidissante. Mais ces compensations sont de l'ordre du dixième de millimètre, ce qui ne suffit pas pour compenser les défauts de contact dans toutes les configurations d'assemblage des cellules. En outre, ces compensations par un film thermoconducteur demeurent conditionnées par un bon serrage de la plaque refroidissante contre les cellules.

Un boîtier selon le préambule de la revendication 1 et un pack batterie selon le préambule de la revendication 13 sont connus du document EP 2 362 463 A2.

Il existe donc un besoin pour une solution de serrage efficace d'une plaque refroidissante contre le module qu'elle est censée réguler thermiquement.

La présente invention vise à proposer une solution nouvelle, simple et économique, pour garantir un contact thermique d'excellente qualité entre un module et une plaque thermorégulatrice. Cette solution peut avantageusement se cumuler avec celle, déjà connue, d'ajout d'un film thermoconducteur.

La présente invention a pour objet un boîtier d'un pack batterie pour véhicule automobile, comprenant un espace intérieur destiné à contenir au moins un module, constitué d'un ensemble de plusieurs cellules électriques, associé à une plaque thermorégulatrice, le boîtier ayant au moins une paroi destinée à se trouver contre la plaque thermorégulatrice d'un module lorsque ce module est présent dans l'espace intérieur du boîtier, ce boîtier étant caractérisé en ce qu'il comporte des moyens de serrage d'un module contre ladite paroi et en ce que ladite paroi comporte, sur sa face tournée vers la plaque thermorégulatrice, un élément en relief inscrit dans un volume présentant une convexité tournée vers l'espace intérieur du boîtier.

Selon l'invention, la paroi s'entend comme la face intérieure d'une cloison. Cette cloison peut être le fond du boîtier, auquel cas la face extérieure de la cloison est la face externe du dessous du boîtier, ou une cloison interne du boîtier, séparant par exemple deux compartiments de ce dernier, auquel cas la face extérieure de la cloison se trouve encore dans le boîtier mais pas dans l'espace intérieur contenant le module.

Avantageusement, la paroi est en matière plastique thermoplastique (par exemple en polypropylène), en matière plastique thermodurcissable (par exemple en polyester), en un mélange des deux précédents, cette matière étant éventuellement chargée de fibres de verre ou de carbone, de polyéthylène ou de toute autre charge, en aluminium moulé (par exemple moulé sous pression), en aluminium coulé.

Selon l'invention, le fait que l'élément en relief soit inscrit dans un volume convexe traduit le fait qu'il est agencé et dimensionné pour transmettre à la plaque thermorégulatrice une pression de serrage exercée par la paroi, cette pression de serrage étant telle que l'élément en relief et la paroi demeurent en contact l'un avec l'autre, nonobstant une éventuelle déformation de la paroi provoquée par le serrage.

On entend par "déformation provoquée par le serrage", toute variation de forme de la paroi entre l'état dans lequel elle n'exerce aucune pression sur la plaque et l'état dans lequel elle exerce la pression de serrage sur la plaque. Cette expression exclut donc d'éventuels défauts de géométrie intrinsèques à la paroi et obtenus indépendamment du serrage, par exemple en raison d'un défaut de moulage. La déformation considérée peut être plastique ou élastique.

La convexité de l'élément en relief vise à compenser les déformations de la paroi, générées par le serrage et qui sont plus accentuées en son centre qu'à proximité de ses bords. L'homme du métier saura, par calculs et/ou essais successifs, déterminer la hauteur et la convexité appropriées pour compenser exactement la déformation de la paroi, compte tenu notamment des dimensions de celle-ci, de sa matière, de son épaisseur et des efforts de serrage.

Les moyens de serrage peuvent consister en des moyens de fermeture du boîtier, comprenant un fond et un couvercle, ledit fond ou ledit couvercle comprenant la paroi destinée à se trouver contre la plaque thermorégulatrice.

Les moyens de serrage peuvent aussi être constitués par des moyens de fixation directe du module sur la paroi, par exemple à l'aide de flasques assujettis à deux faces latérales opposées du module, et ce, même si le boîtier n'est pas encore fermé.

Dans les deux cas, les moyens de serrage définissent une direction S de serrage, qui peut être, par exemple, perpendiculaire à la paroi.

Dans un mode de réalisation particulier, les moyens de serrage définissant une direction de serrage, la convexité de l'élément en relief est définie par les caractéristiques suivantes, les hauteurs étant mesurées dans la direction de serrage :
- l'existence d'au moins un point H le plus haut (absolu) de l'élément en relief,
- l'existence d'au moins un plan P de projection passant par le point le plus haut (absolu) et parallèle à la direction S de serrage, ce plan étant tel que dans toute zone (obtenue par projection sur l'élément en relief d'un disque d'un diamètre prédéterminé situé dans un deuxième plan P' perpendiculaire à la direction S de serrage et passant par le point le plus haut) de l'élément en relief, il existe au moins un point Hᵢ le plus haut (relatif) dont la projection orthogonale hᵢ sur le plan de projection a une hauteur sur le plan P de projection qui décroit avec la distance entre ladite projection et le point H le plus haut (absolu).

Dans la définition ci-dessus, on entend par « point » une surface très réduite de l'élément en relief, assimilable à un point mathématique pour les besoins de l'opération de projection, ce point mathématique étant sensiblement au milieu de ladite surface.

Ainsi, les points les plus hauts de l'élément en relief forment une nappe de zones de contact avec la plaque thermorégulatrice qui suit une forme bombée et assure un serrage efficace de ladite plaque thermorégulatrice, même si la paroi se déforme lors du serrage, immédiatement ou avec le temps.

Les zones de contact peuvent former une surface continue ou être disjointes, en étant par exemple un ensemble de zones de contact « linéaires » (au sens de réduites à des surfaces ayant une petite largeur et une grande longueur), voire « ponctuelles » (au sens de réduites à de petites surfaces).

Dans un premier mode de réalisation de l'invention, l'élément en relief comprend un solide présentant une convexité tournée vers l'intérieur du boîtier.

Selon une première variante, le solide comprend un réseau de nervures en saillie de la face intérieure de la paroi et inscrit dans une enveloppe bombée vers l'intérieur du boîtier, par exemple en calotte sphérique, avec un sommet sensiblement au centre de la paroi.

De façon avantageuse, les nervures du réseau de nervures sont issues de moulage avec la paroi.

Ces nervures comportent un bord supérieur libre à l'opposé de leur base.

Ce bord supérieur libre peut suivre la forme convexe, auquel cas le contact entre chaque nervure et la plaque thermorégulatrice se produit le long du bord libre, qui définit une zone de contact linéaire (au sens où cette zone étroite et longitudinale).

Le bord supérieur libre peut aussi être ondulé ou crénelé, auquel cas le contact entre chaque nervure et la plaque thermorégulatrice se produit aux sommets de ce bord libre, qui définissent des zones de contact ponctuelles, formées par lesdits sommets.

Selon une seconde variante de réalisation, le solide est obtenu en donnant à la paroi une forme convexe en direction de l'intérieur du boîtier, soit du fait que la paroi est d'épaisseur relativement constante et concave à l'extérieur du boîtier, soit du fait que la paroi est épaissie, par exemple en étant fine près de ses bords et en allant s'épaississant vers le centre, avec sa face externe sensiblement plane. Des nervures peuvent être prévues sur la face extérieure de la paroi, pour la renforcer.

Selon une troisième variante, le solide comprend un ensemble de plots formés sur la paroi de fond et chaque zone de contact est le sommet d'un plot.

Pour vérifier la convexité de l'élément en relief au sens défini précédemment, à savoir :
- l'existence d'au moins un point le plus haut (absolu),
- l'existence d'au moins un plan de projection passant par le point le plus haut et parallèle à la direction de serrage,
une méthode peut consister à :
1 °) Fixer un diamètre D en fonction des dimensions de la plaque et du module. D sera de 20 à 80 mm, de préférence compris entre 30 et 60 mm.
2°) Détecter le point H le plus haut (absolu) de l'élément en relief.
3°) Etablir, dans le plan passant par H et perpendiculaire à la direction de serrage S, un quadrillage à maile carrée de côté D/√12 (où √2 est la racine carrée de 2) et y tracer des disques sur la surface convexe du solide.
4°) Détecter à l'intérieur de chaque zone projetée (qui est presque un disque, à la convexité de la plaque près) le point Hᵢ le plus haut (relativement à cette zone) de l'élément en relief.
5°) Prendre un plan P passant par H et parallèle à la direction de serrage et à une première grande dimension de la paroi.
6°) Projeter orthogonalement sur le plan P les points Hᵢ les plus hauts obtenus à l'étape 3 qui sont situés à une distance du plan P inférieure au diamètre D, pour obtenir des points hᵢ.
7°) Vérifier que, sur le plan P, la ligne brisée passant par tous les points hᵢ et par le point H est convexe.
8°) Faire tourner le plan P autour de la direction de serrage à intervalles angulaires réguliers, jusqu'à avoir balayé toute la surface de la paroi, et répéter les étapes 5 et 6 à chaque intervalle.

Dans un deuxième mode de réalisation de l'invention, compatible avec le précédent, l'élément en relief comprend un bloc de matière déformable ayant une face externe de forme convexe vers l'intérieur du boîtier.

Une telle matière déformable peut être une mousse.

Le bloc de matière déformable peut présenter les formes décrites précédemment, pour donner des zones de contact formant une surface continue ou disjointes, en étant par exemple un ensemble de zones de contact linéaires ou ponctuelles.

Les modes de réalisation précédents peuvent se combiner. Entre par exemple dans la portée de l'invention un boîtier ayant une paroi de fond épaissie et complétée par un solide présentant une convexité vers l'intérieur du boîtier.

Avantageusement, la paroi possède une première grande dimension L selon une première direction, une deuxième grande dimension I selon une deuxième direction perpendiculaire à la première. Lorsque l'élément en relief présente une convexité tournée vers l'intérieur, comme dans le cas d'un réseau de nervures ou d'une paroi ou d'un bloc de mousse de forme convexe, la hauteur maximale de la convexité, c'est-à-dire la variation de hauteur entre le point le plus haut et le point de plus bas de l'élément en relief, est de préférence inférieure à 2% d'une des deux plus grandes dimensions L et I de la paroi (c'est-à-dire hors son épaisseur), de préférence de la dimension la plus petite. Un intervalle davantage préféré est 0,1% à 2%. Un intervalle encore davantage préféré est 0,2% à 0,5%. Ainsi, pour une paroi carrée de 500 mm de côté, la hauteur maximale de la convexité de l'élément en relief peut être de 2 mm. En valeurs absolues, il sera néanmoins préférable que la hauteur maximale de la convexité ne dépasse pas 5 mm, quelles que soient les grandeurs L et I.

L'invention a également pour objet un pack batterie, pour véhicule automobile, comprenant un boîtier contenant au moins un module associé à une plaque thermorégulatrice, le boîtier ayant au moins une paroi destinée à se trouver contre la plaque thermorégulatrice du module, caractérisé en ce que cette paroi comporte, sur sa face intérieure tournée vers la plaque thermorégulatrice, un élément en relief agencé et dimensionné pour transmettre à la plaque thermorégulatrice une pression de serrage exercée par la paroi, cette pression de serrage étant telle que l'élément en relief et la plaque thermorégulatrice demeurent en contact l'un avec l'autre, nonobstant une éventuelle déformation de la paroi provoquée par le serrage, ce contact se produisant au moins en des points de l'élément en relief, répartis de telle sorte que tout disque de 20 à 80 mm de diamètre, de préférence 30 à 60 mm de diamètre, dessiné par projection sur la plaque thermorégulatrice contienne au moins deux de ces points.

Dans un mode de réalisation particulier, chaque cellule comporte une enveloppe rigide et les enveloppes des cellules d'un même module sont réunies en un bloc rigide en étant serrées les unes contre les autres selon une direction transversale (par rapport à la direction d'empilement cellule - plaque - élément en relief), avec leurs fonds coplanaires.

De façon préférée, les enveloppes rigides des cellules sont de forme prismatique, avec des bases rectangulaires. D'autres formes sont cependant possibles.

Dans un mode de réalisation particulier, plusieurs modules partagent une même plaque thermorégulatrice. Dans un autre mode de réalisation, chaque module possède sa propre plaque thermorégulatrice.

Selon l'invention, l'obtention d'une bonne conduction thermique s'entend à court terme, la conduction entre module et plaque thermorégulatrice étant immédiatement présente dès que le serrage de la plaque dans le boîtier se produit, et/ou à long terme, la conduction entre module et plaque thermorégulatrice se maintenant dans le temps dans une mesure plus grande que si la plaque thermorégulatrice n'avait pas été serrée dans le boîtier. En d'autres termes, la qualité du contact entre la plaque thermorégulatrice et le module est telle que la performance des échanges thermiques entre module et plaque thermorégulatrice se maintient au cours de la vie du véhicule, sans que les effets du vieillissement, notamment les variations de température, les vibrations, le fluage des matières, ne se fassent sentir.

On comprend l'intérêt de l'élément en relief selon l'invention pour compenser tout défaut de serrage de la plaque contre le module. En effet, que le serrage résulte de la fermeture du boîtier ou de la fixation par flasques du module à la paroi, le risque existe que les dimensions du module soient telles que les points de serrage, c'est-à-dire les parois latérales du boîtier ou les points de fixation des flasques, soient trop espacés les uns des autres et laissent la plaque s'incurver en se dé-serrant du module dans des régions éloignées des points de serrage. C'est le cas en particulier si on assemble entre elles plusieurs cellules pour former un module d'une certaine dimension.

L'élément en relief selon l'invention réalise une prise en sandwich de la plaque thermorégulatrice, entre cet élément en relief et la paroi de fond du module (avec éventuellement interposition d'un pad thermoconducteur), d'une façon répartie sur tout le fond du module.

Une alternative à la présence de l'élément en relief pourrait consister à assujettir la plaque thermorégulatrice au fond de chacune des cellules électriques constituant le module, mais une telle mesure supposerait la présence de moyens de fixation de la plaque sur le fond de chaque cellule, ainsi que l'approvisionnement et la pose d'organes de fixation sur la chaîne de montage du pack batterie, d'où un surcoût non négligeable en matériel et en énergie. L'invention évite ces inconvénients.

Un autre avantage résultant de l'absence de nécessité de fixer chaque cellule à la plaque est que l'on peut ainsi facilement remplacer un module défectueux, sans avoir à le désolidariser de la plaque, ni à purger le circuit de fluide caloporteur parcourant la plaque.

Dans un mode de réalisation particulier de l'invention, l'élément en relief comprend une poche d'un liquide incompressible. En variante, ce liquide est un gel.

Le liquide présente l'avantage de transmettre uniformément et de façon isotropique la pression qu'il subit et qui résulte de la force de serrage de la paroi sur la plaque. Il remplace donc avantageusement tout autre moyen mécanique visant à répartir uniformément sur la plaque thermorégulatrice le force de serrage du boîtier.

En outre, le liquide ou le gel peut présenter des propriétés thermiquement isolantes adaptées, ainsi que des propriétés électriquement isolantes.

Afin de mieux faire comprendre l'invention, on va maintenant en décrire des modes de réalisation, donnés à titre d'exemples non limitatifs, en référence au dessin schématique annexé dans lequel :
- la figure 1 est une vue en perspective de dessous d'un pack batterie selon un mode de réalisation de l'invention, dans son boîtier fermé et monté sous un véhicule,
- la figure 2 est une vue en coupe transversale et en éclaté partiel du pack batterie de la figure 1,
- la figure 3 est une vue en perspective du pack batterie dont le boîtier a été ouvert,
- la figure 4 est une vue analogue à la figure 3, un étage de modules électrique en ayant été retiré,
- la figure 5 est une vue en perspective de dessus du boîtier ouvert complètement vidé de son contenu,
- la figure 6 est une vue en perspective de dessus du boîtier ouvert contenant une plaque thermorégulatrice,
- la figure 7 est une vue schématique d'éléments assemblés d'un étage du pack batterie,
- la figure 8 est une vue schématique de dessous et à plus grande échelle d'une partie de la plaque thermorégulatrice et de ses zones en contact avec la paroi de fond du boîtier,
- la figure 9 est une vue schématique en section selon IX-IX d'une partie de la paroi de fond correspondant à la partie de la plaque thermorégulatrice représentée sur la figure 8,
- la figure 10 est une vue en perspective d'une variante de réalisation de la paroi de fond, dont l'élément en relief comprend un réseau de nervures,
- la figure 11 est une vue générale en coupe d'un pack batterie comprenant une poche de gel en guise d'élément en relief.

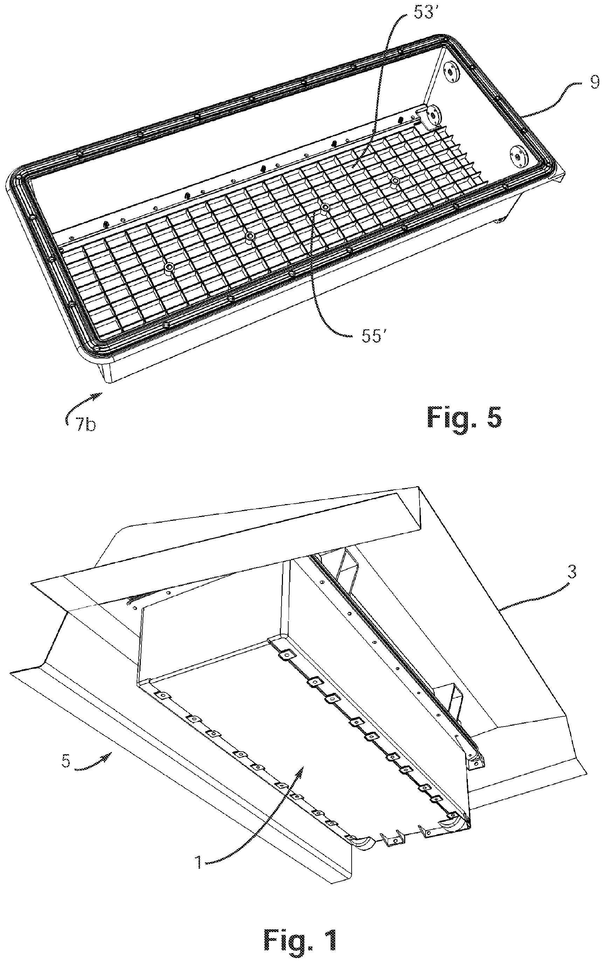

Sur la figure 1, on a représenté un pack batterie 1, fixé sous un plancher 3 d'un véhicule automobile, à l'intérieur d'un logement 5 prévu à cet effet.

Le plancher 3 peut être réalisé en polypropylène.

Cet agencement du pack batterie 1 sous un plancher 3 n'est qu'un exemple qui ne présente aucun caractère limitatif.

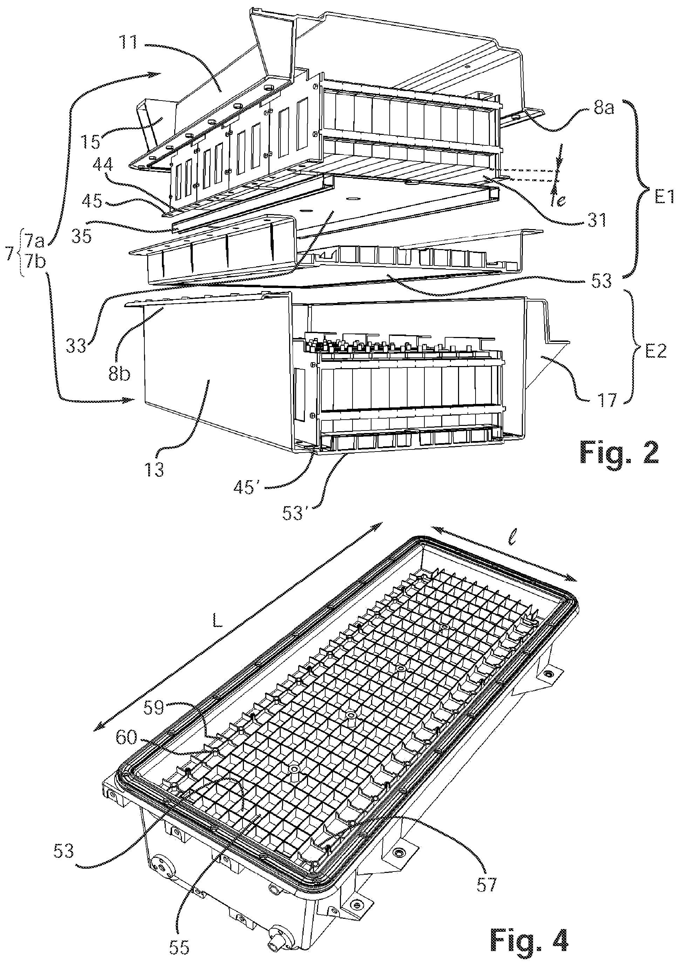

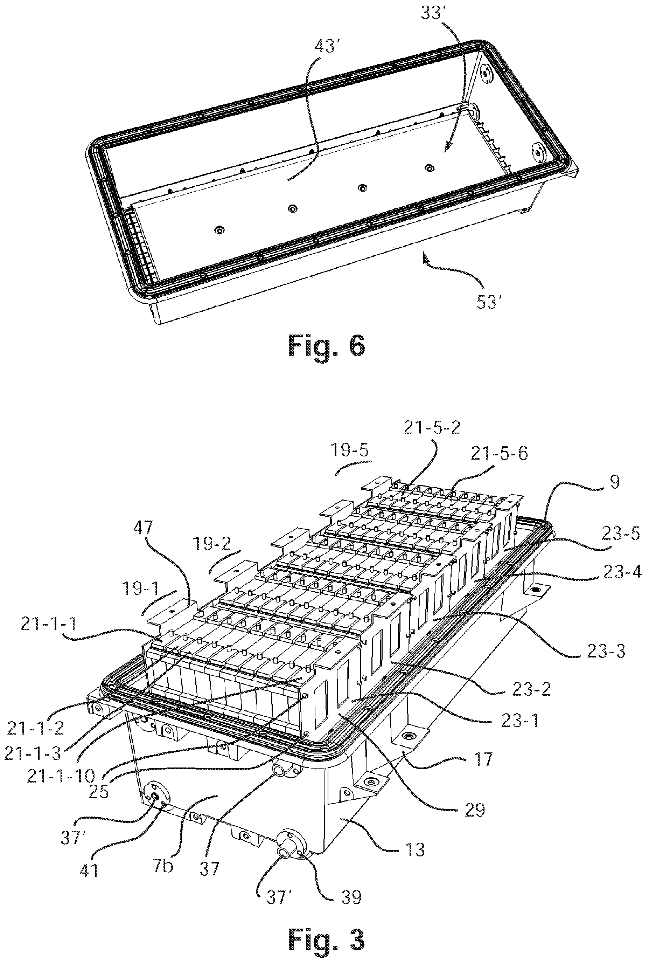

Le pack batterie 1, mieux visible sur l'éclaté de la figure 2, comprend un boîtier 7 sensiblement parallélépipédique en matériau mélangé, formé par deux moitiés supérieure 7a et inférieure 7b, dont chacune comporte un rebord de jonction 8a, 8b. Le rebord 8b de la moitié inférieure 7b est muni d'un joint d'étanchéité 9, représenté sur les figures 4 et 6.

Les grandes faces latérales 11, respectivement 13, de la moitié supérieure 7a, respectivement inférieure 7b, comportent des pattes de fixation 15, respectivement 17, pour la fixation du boîtier 7 au plancher 3.

Sur l'éclaté de la figure 2 notamment, on voit que les éléments présents dans le boîtier forment deux étages E1, E2 d'éléments assemblés, les deux étages étant sensiblement identiques et comprenant chacun un espace intérieur.

L'invention n'est pas limitée à ce mode de réalisation et le boîtier pourrait ne contenir qu'un seul étage, ou au contraire plus de deux étages.

On va maintenant décrire l'étage E1. L'étage E2 contient les mêmes éléments, référencés par les mêmes numéros et le signe '.

Comme on le voit mieux sur la figure 3, un étage contient ici cinq modules électriques 19-1, 19-2, 19-3, 19-4, 19-5 (désignés de façon générique par la référence 19) réunis côte à côte par juxtaposition. Chacun des modules est lui-même composé de dix cellules prismatiques à base rectangulaire 21-1-1, 21-1-2, 21-1-3, 21-1-4, 21-1-5, 21-1-6, 21-1-7, 21-1-8, 21-1-9, 21-1-10 ; 21-2-1 à 21-2-10 ; ... ; 21-5-1 à 21-5-10 (désignées de façon générique par la référence 21 dans la suite) serrées les unes contre les autres par leurs grandes faces latérales et disposées les unes par rapport aux autres de manière que leurs fonds soient coplanaires et que leurs petites faces latérales soient aussi coplanaires, de manière à former globalement un parallélépipède rectangle. D'autres formes de cellules, de même qu'une autre configuration de l'ensemble de cellules formant un module, seraient bien entendu possibles, donnant éventuellement une autre forme globale au module, dès lors que le fond de l'ensemble des cellules est plan ou sensiblement plan.

Dans un module 19-1 (respectivement 19-2, 19-3, 19-4, 19-5), le maintien des cellules entre elles est assuré par des flancs 23-1 (respectivement 23-2, 23-3, 23-4, 23-5, les flancs étant désignés de façon générique par la référence 23) placés contre les deux petites faces d'extrémité du parallélépipède et reliés entre eux par quatre tirants 25 (deux par grande face du module parallélépipédique). Les cinq modules sont maintenus sensiblement dans un même plan lorsqu'ils sont juxtaposés pour former un étage du boîtier.

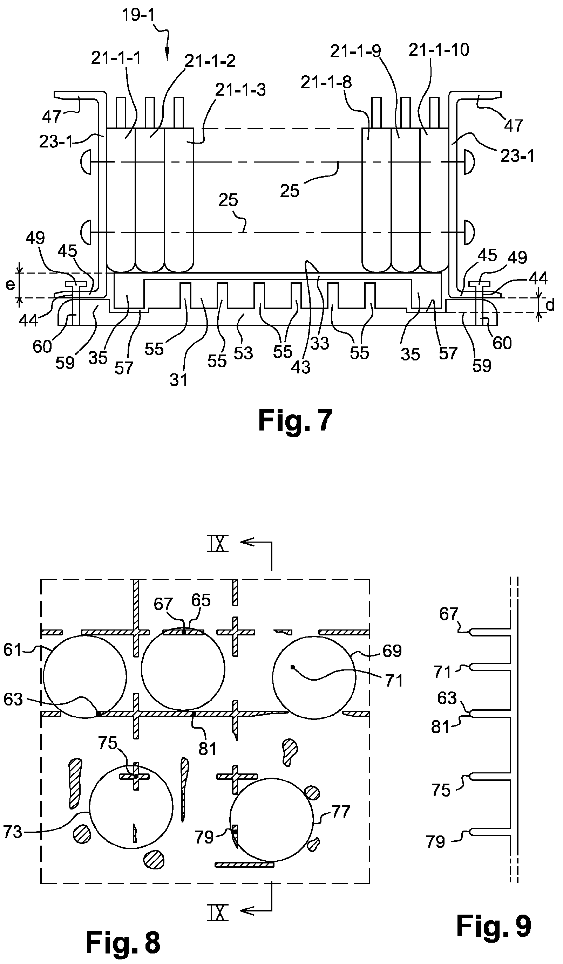

Comme on le voit sur la figure 7, les flancs 23 dépassent au-dessus et en dessous des petites faces d'extrémité du parallélépipède, laissant notamment, sous les fonds des cellules 21, un espace 31, avantageusement de hauteur e comprise entre 10 et 20 mm, et plus précisément de 17 mm dans cet exemple de réalisation.

Ainsi assemblés, les modules électriques 19 présentent les fonds de leurs cellules 21 sensiblement dans un même plan inférieur, formant le plafond de l'espace 31.

Une plaque thermorégulatrice 33, selon l'exemple de réalisation rectangulaire, vient se placer sous tous les fonds des cellules 21 de l'étage. Elle est donc ici commune aux cinq modules 19. Dans une variante, chaque module 19-1 à 19-5 pourrait posséder sa propre plaque. La plaque thermorégulatrice 33 est dimensionnée pour se loger dans l'espace 31. Elle est réalisée en aluminium et possède, le long de ses grands côtés, deux canaux principaux 35, prolongés par des tubes 37 de transport de fluide caloporteur dont chacun débouche dans un orifice du boîtier 7 visible sur la figure 3. Dans l'étage E2, les tubes 37' traversent les orifices 39, 41 de la moitié inférieure 7b du boîtier 7. Chacun des canaux principaux 35 communique avec l'autre à travers des canaux secondaires (non représentés) répartis dans l'épaisseur de la plaque. D'autres configurations de plaque sont possibles, avec, par exemple, des canaux principaux disposés autrement que le long des grands côtés de la plaque.

Comme illustré sur la figure 7, les canaux principaux 35, logés dans l'espace 31 avec la plaque thermorégulatrice 33, dépassent de cet espace 31 d'une hauteur d.

Sur la plaque thermorégulatrice 33, un film thermoconducteur 43 (le film 43' de l'étage E2 est mieux visible sur la figure 6), préférentiellement en silicone chargé céramique, est prévu pour améliorer la conduction thermique entre les modules 19 et la plaque 33. Ce film 43 est déformable dans une variation d'épaisseur, notamment allant de 0,5 à 1 mm et épouse les reliefs dus aux imperfections de surface à la fois des fonds des cellules 21 et de la plaque 33, augmentant ainsi les surfaces de contact et, donc, les voies de conduction thermique entre ces deux pièces.

Les flancs 23 possèdent des rebords inférieurs 45, respectivement supérieurs 47, qui permettent leur fixation, grâce par exemple à des vis 49, à une paroi de séparation 53 qui constitue, pour l'étage supérieur E1, une paroi de fond. La paroi 53 est mieux visible sur la figure 4. A l'étage inférieur E2, l'équivalent de la paroi 53 est la paroi de fond 53', que l'on voit mieux sur la figure 5.

Les parois 53 et 53' sont, au sens de l'invention, des parois destinées à se trouver contre la plaque thermorégulatrice 33, 33' d'un module. Le boîtier comprend deux espaces intérieurs (non référencés), à savoir un par étage, dont chacun est destiné à contenir un module 19 constitué d'un ensemble de plusieurs cellules 21 électriques.

Dans la suite de la description, la face intérieure d'une paroi 53 ou 53' désignera la face de cette paroi tournée vers l'espace intérieur contenant le module 19 interagissant avec la plaque thermorégulatrice 33, 33' se trouvant en contact avec ladite paroi.

On voit mieux, sur le schéma en coupe de la figure 7, comment se produit l'empilement de la paroi 53, de la plaque thermorégulatrice 33 (munie du film 43) et des cellules 21.

En particulier, on voit que la paroi 53 comporte un réseau de nervures 55 croisées et perpendiculaires sur sa face intérieure, au droit de la surface de la plaque thermorégulatrice 33 comprise entre ses canaux principaux 35.

Bien que cela soit peu perceptible sur les figures en raison de la relativement faible variation de hauteur entre elles, les nervures 55 sont agencées en un réseau de nervures croisées inscrit dans une enveloppe bombée vers l'intérieur du boîtier et constituent, au sens de l'invention, un élément en relief présentant une convexité vers l'intérieur du boîtier.

De façon plus précise, L étant la plus grande dimension de la paroi, ici sa longueur puisque la paroi est rectangulaire, et I étant sa deuxième plus grande dimension, ici sa largeur, l'enveloppe dans laquelle sont inscrites les nervures 55 est bombée uniquement dans un plan normal à la paroi et parallèle à la direction de sa largeur I. Autrement dit, en section transversale parallèle à la direction de la longueur L, les nervures 55 ont la même hauteur sur toute la longueur L, mais cette hauteur varie en fonction de la section considérée et est maximale sur l'axe de symétrie centrale X de la paroi.

Dans l'exemple de ce mode de réalisation, la hauteur maximale de la convexité, c'est-à-dire la variation de hauteur entre le point le plus bas et le point le plus haut du réseau de nervures 55 est de 1,5% de la largeur I (qui est la plus petite des deux plus grandes dimensions L et I de la paroi 53).

Le réseau de nervures 55 est bordé, sur chacun de ses deux grands côtés longitudinaux, par un évidement 57 de profondeur d dimensionné pour accueillir les canaux principaux 35 de la plaque thermorégulatrice 33.

Le long de chaque évidement 57, des appuis 59 parallèles à la direction de la largeur I servent de siège aux rebords inférieurs 45 des flancs 23. Certains de ces appuis 59 incorporent une cheminée de serrage 60 qui est alignée avec un orifice 44 des rebords inférieurs 45 des flancs 23. Chaque rebord 45 comporte deux orifices 44 et s'étend sur une longueur correspondant à six appuis 59 (numérotés dans ce qui suit premier à sixième, dans le sens de la longueur), en ne couvrant entièrement que les deuxième à cinquième appuis 59, tandis qu'il ne couvre que la moitié de chacun des première et sixième appuis 59, chacun de ces deux appuis recevant, sur son autre moitié, le flanc voisin du flan 23 considéré.

Les cheminées de serrage 60 déterminent la direction de serrage, qui est donc ici, comme ce sera souvent le cas, perpendiculaire au plan général de la paroi 53.

Comme cela est mieux visible sur l'agrandissement de la figure 7, le serrage des vis 49 traversant les orifices 44 des rebords inférieurs 45 des flancs 23 et les cheminées de serrage 60 provoque le rapprochement des modules 19 et de la paroi 53 et, en conséquence, la prise en sandwich de la plaque thermorégulatrice 33 entre la paroi 53 et les cellules 21, ainsi que l'écrasement du film 43 entre la plaque thermorégulatrice 33 et les fonds des cellules 21.

Grâce à la forme convexe de l'enveloppe des nervures 55, la déformation de la paroi de fond 53 lors du serrage, potentiellement de plus en plus marquée à mesure qu'on s'approche de l'axe de symétrie X de cette paroi 53, est compensée par une hauteur accrue des nervures à mesure qu'on s'approche de cet axe.

Ainsi, dans un étage donné, on trouve l'empilement des éléments suivants :
- des cellules 21, 21' rassemblées en modules 19, 19',
- une plaque thermorégulatrice 33, 33',
- une paroi 53, 53' serrée contre les modules par des moyens de serrage.

Sur la figure 8, on a représenté les zones de la plaque thermorégulatrice 33 sur lesquelles s'exerce la pression des nervures 55 après serrage.

On désigne ces zones par l'expression « zones de contact ».

Cette pression résulte de la mise en contact des zones les plus hautes de la paroi de fond 53.

La matérialisation des zones de contact peut être obtenue en pratique par le dépôt d'une poudre colorée sur les bords supérieurs libres des nervures 55. Lors du serrage de la plaque thermorégulatrice 33 par la paroi de fond 53, cette poudre se transfère sur la plaque 33 pour donner le motif représenté à la figure 8.

Comme on le voit sur cette figure 8, si on prend un disque quelconque de diamètre D sur la plaque thermorégulatrice 33, il y existe toujours au moins une zone de contact. Cette zone de contact correspond, sur la paroi de fond 53, à un point Hi le plus haut des bords supérieurs libres des nervures 55.

Ainsi, dans le disque 61, on trouve le point le plus haut 63, dans le disque 65, on trouve le point le plus haut 67, dans le disque 69, on trouve le point le plus haut 71, dans le disque 73, on trouve le point le plus haut 75, et dans le disque 77, on trouve le point le plus haut 79.

En outre, la paroi de fond 53 possède un point le plus haut 81.

Chacun de ces points les plus hauts 63, 67, 71, 75, 79 et 81 se trouve au sommet d'une nervure 55 du réseau de nervures, tel que représenté en section sur la figure 9.

On voit aussi sur cette figure que les sommets des nervures 55 peuvent être arrondis en section, ce qui a pour effet de réduire la surface de chaque zone de contact. Toutefois, en raison de l'aptitude à la déformation (élastique ou plastique) de la matière constituant les nervures, le sommet de chaque nervure peut s'écraser de sorte que les zones de contact ne se limitent pas à des lignes.

La plaque thermorégulatrice 33 est donc maintenue en contact avec les cellules 21 de manière optimale sur toute sa surface, étant entendu qu'on entend par de « manière optimale » le fait que le contact entre ces deux pièces s'établisse au moins en certaines zones suffisamment rapprochées pour que deux points voisins ne soient pas distants de plus de la distance D, ou, en d'autres termes, pour que tout cercle de diamètre D dessiné sur la plaque thermorégulatrice 33 contienne au moins deux de ces zones de contact, ce qui traduit une densité assez élevée et régulière de points de contact entre la plaque et les cellules.

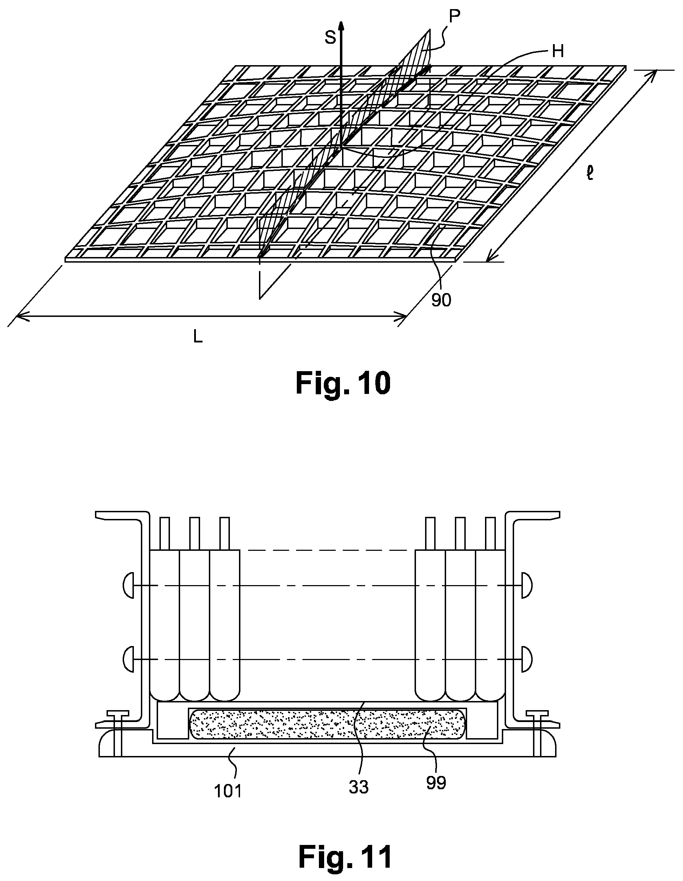

Dans le mode de réalisation de la figure 10, la paroi 53 présente deux grandes dimensions L et I. Elle comporte un élément en relief constitué par un réseau de nervures croisées perpendiculaires 90 à maille carrée.

Ce réseau de nervures 90 est convexe, au sens où les sommets des nervures 90 sont inscrits dans une enveloppe bombée vers le haut (par rapport à la figure).

La convexité de l'enveloppe s'exprime dans les deux directions de L et de I, avec une hauteur maximale, c'est-à-dire une variation de hauteur entre le point le plus bas et le point le plus haut, avantageusement de 2% de I, bien que, sur la représentation schématique de la figure 10, la courbure a été accentuée pour bien faire comprendre en quoi consiste ladite convexité.

On peut vérifier la convexité du réseau de nervures en procédant comme suit.
1°) On fixe un diamètre D fonction des dimensions de la plaque thermorégulatrice, qui est ici supposée avoir la même largeur I et la même longueur L que la paroi. On prend ici D = 50 mm.
2°) On détecte le point le plus haut H de la paroi, selon la direction de serrage indiquée par la flèche S pointant vers le haut.
3°) On trace un quadrillage à maille carrée de côté D/√2 ayant une intersection confondue avec le point H. A chaque intersection du maillage, on trace un cercle de diamètre D.
4°) Dans chaque disque de diamètre D, on cherche le point le plus haut Hᵢ.
5°) On prend un plan P passant par le point H et parallèle à la direction S et à la direction de la longueur L.
6°) On projette orthogonalement sur le plan P les points Hᵢ les plus hauts obtenus à l'étape 3 qui sont situés à une distance de ce plan inférieure à D, pour obtenir des points hᵢ.
7°) On vérifie que, sur le plan P, la ligne brisée passant par tous les points hᵢ et par le point H est convexe.
8°) On fait tourner le plan P autour de la direction S et on répète les étapes 5 et 6.

Une méthode alternative consiste à rechercher s'il existe une direction « de non convexité » selon laquelle tous les points obtenus à l'étape 3 présents dans un plan parallèle à cette direction ont la même hauteur. Si tel est le cas, on exécute les étapes 5 et 6 en choisissant un plan P parallèle à S et perpendiculaire à la direction « de non convexité », en faisant balayer toute la paroi au plan P par translation de pas D.

Dans le mode de réalisation de la figure 11, les nervures précédemment décrites sont remplacées par une poche de gel 99. La paroi de fond 101 du boîtier est plane et dépourvue de nervures. La poche de gel 99 constitue un élément en relief de la paroi de fond 101, qui transmet à la plaque thermorégulatrice 33, de façon homogène en tout point de la surface de celle-ci, la pression exercée par la paroi de fond 101.

Là encore, la pression transmise est la même en tout point de la plaque thermorégulatrice 53, indépendamment de la déformation subie par la paroi de fond 101 lors du serrage des vis 49 assujettissant les flancs 23 à la paroi de fond 101.

Il est bien entendu que les exemples décrits ci-dessus ne sont donnés qu'à titre indicatif et qu'ils ne pourront être interprétés comme limitant la portée des revendications.

## Revendications

1. Boîtier (7) d'un pack batterie (1) pour véhicule automobile, comprenant un espace intérieur destiné à contenir au moins un module (19), constitué d'un ensemble de plusieurs cellules électriques (21), associé à une plaque thermorégulatrice (33), le boîtier ayant au moins une paroi (53, 53') destinée à se trouver contre la plaque thermorégulatrice (33) lorsque le module (19) est présent dans le boîtier, ce boîtier étant **caractérisé en ce qu'**il comporte des moyens de serrage (23, 49, 60) d'un module (19) contre ladite paroi (53, 53') et **en ce que** ladite paroi (53, 53') comporte, sur sa face intérieure tournée vers la plaque thermorégulatrice (33), un élément en relief (55, 90) inscrit dans un volume présentant une convexité tournée vers l'espace intérieur du boîtier.

2. Boîtier selon la revendication 1, dont la paroi (53, 53') est en matière plastique thermoplastique ou en matière plastique thermodurcissable ou en un mélange des deux précédents ou en aluminium moulé ou en aluminium coulé.

3. Boîtier selon l'une quelconque des revendications 1 et 2, dans lequel les moyens de serrage consistent en des moyens de fermeture du boîtier, comprenant un fond et un couvercle, ledit fond ou ledit couvercle comprenant la paroi (53') destinée à se trouver contre la plaque thermorégulatrice (33).

4. Boîtier selon l'une quelconque des revendications 1 et 2, dans lequel les moyens de serrage consistent en des moyens de fixation directe du module (19) sur la paroi (53, 53'), par exemple à l'aide de flancs (23) assujettis à deux faces latérales opposées du module (19).

5. Boîtier selon l'une quelconque des revendications précédentes, dans lequel les moyens de serrage définissent une direction de serrage (S) et la convexité de l'élément en relief est définie par les caractéristiques suivantes, les hauteurs étant mesurées dans la direction de serrage :
- l'existence d'au moins un point H (81) le plus haut de l'élément en relief,
- l'existence d'au moins un plan P de projection passant par le point H (81) le plus haut et parallèle à la direction de serrage (S), ce plan étant tel que dans toute zone obtenue par projection sur l'élément en relief d'un disque (61, 65, 69, 73, 77) d'un diamètre prédéterminé situé dans un deuxième plan P' perpendiculaire à la direction de serrage et passant par le point le plus haut (81) de l'élément en relief, il existe au moins un point Hᵢ (63, 67, 71, 75, 79) le plus haut dont la projection orthogonale hᵢ sur le plan de projection a une hauteur sur le plan de projection qui décroit avec la distance entre ladite projection et le point H (81) le plus haut.

6. Boîtier selon l'une quelconque des revendications précédentes, dans lequel l'élément en relief comprend un solide (55, 90) présentant une convexité tournée vers l'intérieur du boîtier.

7. Boîtier selon la revendication 6, dans lequel le solide comprend un réseau de nervures (55) en saillie de la face intérieure de la paroi et inscrit dans une enveloppe bombée vers l'intérieur du boîtier.

8. Boîtier selon la revendication 7, dans lequel les nervures (55) du réseau de nervures sont issues de moulage avec la paroi (53, 53').

9. Boîtier selon la revendication 6, dans lequel le solide est obtenu en donnant à la paroi une forme convexe en direction de l'intérieur du boîtier.

10. Boîtier selon la revendication 6, dans lequel le solide comprend un ensemble de plots formés sur la paroi de fond et chaque zone de contact est le sommet d'un plot.

11. Boîtier selon l'une quelconque des revendications précédentes, dans lequel l'élément en relief comprend un bloc de matière déformable ayant une face externe de forme convexe vers l'intérieur du boîtier.

12. Boîtier selon l'une quelconque des revendications précédentes, dans lequel la paroi (53, 53') possède une première grande dimension (L) selon une première direction, une deuxième grande dimension (I) selon une deuxième direction perpendiculaire à la première, et dans lequel la hauteur maximale de la convexité, c'est-à-dire la variation de hauteur entre le point le plus haut et le point de plus bas de l'élément en relief, est comprise entre 0,2% et 0,5% de l'une de ces deux grandes dimensions de la paroi, de préférence de la dimension la plus petite, et de préférence entre 0,1% et 2%, et de préférence entre 0,2% et 0,5%.

13. Pack batterie, pour véhicule automobile, comprenant un boîtier contenant au moins un module (29), constitué d'un ensemble de plusieurs cellules électriques (21), associé à une plaque thermorégulatrice (33), le boîtier ayant au moins une paroi (53, 53') destinée à se trouver contre la plaque thermorégulatrice (33) du module (29), **caractérisé en ce que** cette paroi (53, 53') comporte, sur sa face intérieure tournée vers la plaque thermorégulatrice (33), un élément en relief (55, 90, 99) agencé et dimensionné pour transmettre à la plaque thermorégulatrice (33) une pression de serrage exercée par la paroi (53, 53'), cette pression de serrage étant telle que l'élément en relief (55, 90, 99) et la plaque thermorégulatrice (33) demeurent en contact l'un avec l'autre, nonobstant une éventuelle déformation de la paroi (53, 53') provoquée par le serrage, ce contact se produisant au moins en des points de l'élément en relief (55, 90, 99), répartis de telle sorte que tout disque de 20 à 80 mm de diamètre, de préférence 30 à 60 mm de diamètre, dessiné par projection sur la plaque thermorégulatrice (33) contienne au moins deux de ces points.

14. Pack batterie selon la revendication 13, dans lequel chaque cellule (21) comporte une enveloppe rigide et les enveloppes des cellules d'un même module (19) sont réunies en un bloc rigide en étant serrées les unes contre les autres selon une direction transversale avec leurs fonds coplanaires.

15. Pack batterie selon l'une quelconque des revendications 13 et 14, dans lequel les enveloppes rigides des cellules (21) sont de forme prismatique, avec des bases rectangulaires.

16. Pack batterie selon l'une quelconque des revendications 13 à 15, dans lequel plusieurs modules (19) partagent une même plaque thermorégulatrice (33).

17. Pack batterie selon l'une quelconque des revendications 13 à 15, dans lequel chaque module possède sa propre plaque thermorégulatrice.

18. Pack batterie selon l'une quelconque des revendications 13 à 17, dans lequel l'élément en relief comprend une poche (99) d'un liquide ou d'un gel incompressible, apte à transmettre uniformément et de façon isotropique la pression qu'il subit et qui résulte de la force de serrage de la paroi sur la plaque.

19. Pack batterie selon la revendication 18, dans lequel le liquide ou le gel présente des propriétés thermiquement isolantes.

20. Pack batterie selon l'une quelconque des revendications 18 et 19, dans lequel le liquide ou le gel présente des propriétés électriquement isolantes.

## Patentansprüche

1. Gehäuse (7) eines Batteriepacks (1) für Kraftfahrzeug, umfassend einen Innenraum, der dazu bestimmt ist, mindestens ein Modul (19) zu enthalten, das von einer Anordnung aus mehreren elektrischen Zellen (21) gebildet ist, die einer wärmeregulierenden Platte (33) zugeordnet ist, wobei das Gehäuse mindestens eine Wand (53, 53') hat, die dazu bestimmt ist, an der wärmeregulierenden Platte (33) anzuliegen, wenn sich das Modul (19) in dem Gehäuse befindet, wobei dieses Gehäuse **dadurch gekennzeichnet ist, dass** es Mittel zum Anpressen (23, 49, 60) eines Moduls (19) gegen die Wand (53, 53') aufweist und dass die Wand (53, 53') an ihrer Innenseite, die zu der wärmeregulierenden Platte (33) hin gekehrt ist, ein erhabenes Element (55, 90) aufweist, das sich in ein Volumen einpasst, das eine Konvexität aufweist, die zu dem Innenraum des Gehäuses hin gekehrt ist.

2. Gehäuse nach Anspruch 1, dessen Wand (53, 53') aus thermoplastischem Kunststoff oder aus duroplastischem Kunststoff oder aus einem Gemisch der zwei zuvor genannten oder aus geformtem Aluminium oder gegossenem Aluminium ist.

3. Gehäuse nach einem der Ansprüche 1 und 2, wobei die Anpressmittel aus Mitteln zum Schließen des Gehäuses bestehen, die einen Boden und einen Deckel umfassen, wobei der Boden oder der Deckel die Wand (53') umfassen, die dazu bestimmt ist, an der wärmeregulierenden Platte (33) anzuliegen.

4. Gehäuse nach einem der Ansprüche 1 und 2, wobei die Anpressmittel aus Mitteln zum direkten Befestigen des Moduls (19) an der Wand (53, 53') bestehen, zum Beispiel mit Hilfe von Seitenteilen (23), die an zwei angebrachten Seitenflächen des Moduls (19) befestigt sind.

5. Gehäuse nach einem der vorhergehenden Ansprüche, wobei die Anpressmittel eine Anpressrichtung (S) definieren und die Konvexität des erhabenen Elements durch die folgenden Merkmale definiert ist, wobei die Höhen in der Anpressrichtung gemessen sind:
- Vorhandensein mindestens eines höchsten Punktes H (81) des erhabenen Elements,
- Vorhandensein mindestens einer Projektionsebene P, die durch den höchsten Punktes H (81) verläuft und zu der Anpressrichtung (S) parallel ist, wobei diese Ebene dergestalt ist, dass in der gesamten Zone, die erhalten wird durch Projektion, auf das erhabene Element, einer Scheibe (61, 65, 69, 73, 77) mit einem vorbestimmten Durchmesser, die in einer zweiten Ebene P' liegt, die zu der Anpressrichtung (S) senkrecht ist und durch den höchsten Punktes H (81) des erhabenen Elements verläuft, mindestens ein höchster Punkt Hi (63, 67, 71, 75, 79) vorhanden ist, dessen orthogonale Projektion hi auf die Projektionsebene eine Höhe auf der Projektionsebene hat, die mit dem Abstand zwischen der Projektion und dem höchsten Punkt H (81) zunimmt.

6. Gehäuse nach einem der vorhergehenden Ansprüche, wobei das erhabene Element einen Festkörper (55, 90) umfasst, der eine Konvexität aufweist, die zu dem Inneren des Gehäuses hin gekehrt ist.

7. Gehäuse nach Anspruch 6, wobei der Festkörper ein Netz aus Rippen (55) umfasst, die von der Innenfläche der Wand vorspringen, und sich in eine Umhüllung einpasst, die zu dem Inneren des Gehäuses hin gewölbt ist.

8. Gehäuse nach Anspruch 7, wobei die Rippen (55) des Netzes aus Rippen gemeinsam mit der Wand (53, 53') geformt sind.

9. Gehäuse nach Anspruch 6, wobei der Festkörper erhalten wird, in dem der Wand eine Form verliehen wird, die in Richtung des Inneren des Gehäuses konvex ist.

10. Gehäuse nach Anspruch 6, wobei der Festkörper eine Anordnung aus Stiften umfasst, die auf der Bodenwand gebildet sind, und jede Kontaktzone die Spitze eines Stiftes ist.

11. Gehäuse nach einem der vorhergehenden Ansprüche, wobei das erhabene Element einen verformbaren Materialblock umfasst, der eine Außenfläche hat mit einer Form, die zu dem Inneren des Gehäuses hin konvex ist.

12. Gehäuse nach einem der vorhergehenden Ansprüche, wobei die Wand (53, 53') eine erste große Abmessung (L) in einer ersten Richtung aufweist, eine zweite große Abmessung (1) in einer zweiten Richtung, die zu der ersten senkrecht ist, aufweist und wobei die maximale Höhe der Konvexität, das heißt die Abweichung der Höhe zwischen dem höchsten Punkt und dem tiefsten Punkt des erhabenen Elements, zwischen 0,2 % und 0,5 % einer der zwei großen Abmessungen der Wand, vorzugsweise der kleineren Abmessung, und vorzugsweise zwischen 0,1 % und 2 %, und vorzugsweise zwischen 0,2 % und 0,5 % beträgt.

13. Batteriepack für Kraftfahrzeug, umfassend ein Gehäuse, das mindestens ein Modul (29) enthält, das von einer Anordnung aus mehreren elektrischen Zellen (21) gebildet ist, die einer wärmeregulierenden Platte (33) zugeordnet ist, wobei das Gehäuse mindestens eine Wand (53, 53') hat, die dazu bestimmt ist, an der wärmeregulierenden Platte (33) des Moduls (29) anzuliegen, **dadurch gekennzeichnet, dass** diese Wand (53, 53') an ihrer Innenseite, die zu der wärmeregulierenden Platte (33) hin gekehrt ist, ein erhabenes Element (55, 90, 99) aufweist, das dafür eingerichtet und dimensioniert ist, auf die wärmeregulierende Platte (33) einen Anpressdruck zu übertragen, der von der Wand (53, 53') ausgeübt wird, wobei dieser Anpressdruck dergestalt ist, dass das erhabene Element (55, 90, 99) und die wärmeregulierende Platte (33) trotz einer etwaigen Verformung der Wand (53, 53'), die durch das Anpressen bewirkt wird, in Kontakt miteinander bleiben, wobei dieser Kontakt mindestens an Punkten des erhabenen Elements (55, 90, 99) erzeugt wird, die derart verteilt sind, dass jede Scheibe mit einem Durchmesser von 20 bis 80 mm, vorzugsweise mit einem Durchmesser von 30 bis 60 mm, die durch Projektion auf die wärmeregulierende Platte (33) gezeichnet wird, mindestens zwei dieser Punkte enthält.

14. Batteriepack nach Anspruch 13, wobei jede Zelle (21) eine starre Umhüllung aufweist und die Umhüllungen der Zellen eines gleichen Moduls (19) in einem starren Block vereint sind, indem sie in einer Querrichtung mit ihren koplanaren Böden gegeneinander gepresst werden.

15. Batteriepack nach einem der Ansprüche 13 und 14, wobei die starren Umhüllungen der Zellen (21) eine Prismaform mit rechtwinkligen Basen haben.

16. Batteriepack nach einem der Ansprüche 13 bis 15, wobei mehrere Module (19) sich eine gleiche wärmeregulierende Platte (33) teilen.

17. Batteriepack nach einem der Ansprüche 13 bis 15, wobei jedes Modul seine eigene wärmeregulierende Platte besitzt.

18. Batteriepack nach einem der Ansprüche 13 bis 17, wobei das erhabene Element eine Blase (99) für eine nicht komprimierbare Flüssigkeit oder ein nicht komprimierbares Gel umfasst, die bzw. das in der Lage ist, den Druck, dem sie bzw. es ausgesetzt ist und der aus der Anpresskraft der Wand auf die Platte resultiert, gleichförmig und isotropisch zu übertragen.

19. Batteriepack nach Anspruch 18, wobei die Flüssigkeit oder das Gel thermisch isolierende Eigenschaften aufweist.

20. Batteriepack nach einem der Ansprüche 18 und 19, wobei die Flüssigkeit oder das Gel elektrisch isolierende Eigenschaften aufweist.

## Claims

1. Housing (7) of a battery pack (1) for a motor vehicle, comprising an inner space designed to contain at least one module (19), consisting of a set of several electric cells (21), associated with a thermoregulating plate (33), the housing having at least one wall (53, 53') designed to rest against the thermoregulating plate (33) when the module (19) is present in the housing, this housing being **characterised in that** it comprises fastening means (23, 49, 60) for fastening a module (19) against said wall (53, 53') and **in that** said wall (53, 53') comprises, on its inner face turned towards the thermoregulating plate (33), an element in relief (55, 90) inscribed in a volume having a convexity turned towards the inner space of the housing.

2. Housing according to claim 1, of which the wall (53, 53') is made of a thermoplastic plastic material or of a thermosetting plastic material or of a mixture of the two materials or of moulded aluminium or of cast aluminium.

3. Housing according to claim 1 or 2, wherein the fastening means consist of closing means for closing the housing, comprising a bottom and a lid, said bottom or said lid comprising the wall (53') designed to rest against the thermoregulating plate (33).

4. Housing according to claim 1 or 2, wherein the fastening means consist of fixation means for directly fixing the module (19) on the wall (53, 53'), for example by using flanks (23) fastened to two opposite lateral faces of the module (19).

5. Housing according to any of the preceding claims, wherein the fastening means define a fastening direction (S) and the convexity of the element in relief is defined by the following features, the heights being measured in the fastening direction:
- presence of at least one highest point H (81) of the element in relief,
- presence of at least one projection plane P passing through the highest point H (81) and parallel to the fastening direction (S), this plane being such that in any area obtained by projection on the element in relief of a disc (61, 65, 69, 73, 77) of predetermined diameter located in a second plane P' perpendicular to the fastening direction and passing through the highest point (81) of the element in relief, there is at least one highest point Hi (63, 67, 71, 75, 79) whose orthogonal projection hi on the plane of projection has a height on the plane of projection which decreases with the distance between said projection and the highest point H (81).

6. Housing according to any of the preceding claims, wherein the element in relief comprises a solid (55, 90) having a convexity turned towards the inside of the housing.

7. Housing according to claim 6, wherein the solid comprises a net of ribs (55) projecting from the inner face of the wall and inscribed in an envelope doming towards the inside of the housing.

8. Housing according to claim 7, wherein the ribs (55) of the net of ribs are integrally moulded with the wall (53, 53').

9. Housing according to claim 6, wherein the solid is obtained by giving the wall a shape protruding towards the inside of the housing.

10. Housing according to claim 6, wherein the solid comprises a set of studs formed on the bottom wall and each contact area is the top of a stud.

11. Housing according to any of the preceding claims, wherein the element in relief comprises a block of deformable material having an outer face of a shape protruding towards the inside of the housing.

12. Housing according to any of the preceding claims, wherein the wall (53, 53') has a first large dimension (L) along a first direction, a second large dimension (I) along a second direction perpendicular to the first direction, and wherein the maximum height of the convexity, i.e. the variation of the height between the highest point and the lowest point of the element in relief, is between 0.2% and 0.5% of one of these two large dimensions of the wall, preferably of the smaller one of these two large dimension, and preferably between 0.1% and 2%, and preferably between 0.2% and 0.5%.

13. Battery pack for a motor vehicle, comprising a housing containing at least one module (29), consisting of a set of several electric cells (21), associated with a thermoregulating plate (33), the housing having at least one wall (53, 53') designed to rest against the thermoregulating plate (33) of the module (29), **characterised in that** this wall (53, 53') comprises, on its inner face turned towards the thermoregulating plate (33), an element in relief (55, 90, 99) arranged and dimensioned to transmit to the thermoregulating plate (33) a fastening pressure exerted by the wall (53, 53'), this fastening pressure being such that the element in relief (55, 90, 99) and the thermoregulating plate (33) remain in contact with each other, notwithstanding a possible deformation of the wall (53, 53') caused by the fastening, this contact occurring at least at points of the element in relief (55, 90, 99), which are distributed such that any disc of diameter of 20 to 80 mm, preferably 30 to 60 mm, drawn by projection on the thermoregulating plate (33), contains at least two of these points.

14. Battery pack according to claim 13, wherein each cell (12) comprises a rigid envelope and the envelopes of the cells of a same module (19) makes up a rigid block by being pressed against each other along a transverse direction with their coplanar bottoms.

15. Battery pack according to claim 13 or 14, wherein the rigid envelopes of the cells (21) have a prismatic shape, with rectangular bases.

16. Battery pack according to any of claims 13 to 15, wherein several modules (19) share the same thermoregulating plate (33).

17. Battery pack according to any of claims 13 to 15, wherein each module has its own thermoregulating plate.

18. Battery pack according to any of claims 13 to 17, wherein the element in relief comprises a pocket (99) of an incompressible liquid or gel, capable of uniformly and isotropically transmitting the pressure which it is subjected to and results from the force fastening the wall against the plate.

19. Battery pack according to claim 18, wherein the liquid or the gel presents heat isolation properties.

20. Battery pack according to claim 18 or 19, wherein the liquid or the gel presents electrical isolation properties.
